# EUROPÄISCHE PATENTSCHRIFT

(11) **EP 2 793 205 B1**
(45) Veröffentlichungstag und Bekanntmachung des Hinweises auf die Patenterteilung: **04.11.2015**
(21) Anmeldenummer: 13164397.5
(22) Anmeldetag: 19.04.2013
(51) Int. Cl.: G08G 1/017, G07B 15/06, H04W 4/00

(54) **Onboard-Anlage für ein Fahrzeug**
Onboard installation for a vehicle
Installation embarquée pour un véhicule

(43) Veröffentlichungstag der Anmeldung: 22.10.2014
(73) Patentinhaber: Kapsch TrafficCom AG, 1120 Wien (AT)
(72) Erfinder: Povolny, Robert, 1190 Wien (AT); Nagy, Oliver, 1190 Wien (AT)
(74) Vertreter: Weiser, Andreas

(56) Entgegenhaltungen:
- WO-A1-2010/031625
- US-A1- 2005 285 743
- US-A1- 2006 155 430
- US-A1- 2010 148 947

## Beschreibung

Die vorliegende Erfindung betrifft eine Onboard-Unit für ein Verkehrstelematiksystem. Die Erfindung betrifft ferner eine Onboard-Anlage für ein Fahrzeug, umfassend eine solche Onboard-Unit.

Onboard-Units (OBUs) werden in einer Vielzahl unterschiedlicher Anwendungen von Verkehrstelematiksystemen eingesetzt, sei es zur elektronischen Identifikation eines Fahrzeugs oder zur Entrichtung von Straßen-, Zutritts-, Gebiets- oder City-Maut, zur Entrichtung von Parkgebühren, zur Zutrittskontrolle (z.B. Schrankenanlagen), zur elektronischen Fahrzeugregistrierung (electronic vehicle registration, EVR) usw. usf. Zu diesem Zweck werden Onboard-Units häufig mit einem Kurzreichweiten-Kommunikationsmodul ausgestattet, beispielsweise nach dem DSRC-Standard (dedicated short range communication), um sie auf den lokalen Funkabdeckungsbereich einer sie abfragenden Funkbake lokalisieren zu können. Das Kommunikationsmodul wird dabei zusammen mit der restlichen Elektronik der Onboard-Unit von einer in der Onboard-Unit eingebauten Batterie energieversorgt.

Um Energie zu sparen und eine lange Lebensdauer der Batterie zu erreichen, haben Onboard-Units bzw. ihr Kommunikationsmodul in der Regel einen energieversorgten bzw. -verbrauchenden Arbeits- und Kommunikationsmodus und einen energiesparenden Ruhemodus. Durch Ansprechen der Onboard-Unit mit einem externen Kommunikationsgerät, z.B. einer Funkbake eines Straßenmautsystem, einer Zutrittsschranke, eines Kontrollgeräts od.dgl., kann die Onboard-Unit aus ihrem Ruhemodus aufgeweckt und vorübergehend in ihren Arbeits- bzw. Kommunikationsmodus versetzt werden; anschließend verfällt sie bis zur nächsten Kommunikation wieder in den Ruhemodus. Auf diese Weise können derzeit kommerziell erhältliche Onboard-Units eine Batterielebensdauer von bis zu sieben Jahren erreichen.

Die Erfindung setzt sich zum Ziel, Onboard-Units der genannten Art mit weiteren Funktionalitäten auszustatten, insbesondere ohne die Batterielebensdauer der Onboard-Unit zu beeinträchtigen.

Dieses Ziel wird in einem ersten Aspekt der Erfindung mit einer Onboard-Unit für ein Verkehrstelematiksystem erreicht, umfassend:
ein erstes Kommunikationsmodul, ausgebildet zur Nahbereichs-Funkkommunikation mit einem ersten externen Kommunikationsgerät,
ein zweites Kommunikationsmodul, ausgebildet zur Fernbereichs-Funkkommunikation mit einem zweiten externen Kommunikationsgerät, und
einen nicht-flüchtigen Speicher, auf welchen sowohl das erste als auch das zweite Kommunikationsmodul Zugriff nehmen kann,
wobei jedes Kommunikationsmodul einen energieversorgten Kommunikationsmodus und einen energielosen oder -sparenden Ruhemodus hat und
wobei die Energieversorgung des Speichers während des Zugriffs darauf durch das jeweils zugreifende Kommunikationsmodul bewirkt ist.

Gemäß der Erfindung wird die Onboard-Unit zusätzlich zu dem eingangs erörterten Kurzreichweiten-Kommunikationsmodul mit einem weiteren Kommunikationsmodul ausgestattet, welches für eine noch kürzere Funkreichweite ausgebildet ist, hier "Nahbereichs-Funkkommunikation" bezeichnet. Unter einer Nahbereichs-Funkkommunikation wird in der vorliegenden Beschreibung eine Kommunikation über eine Funkreichweite von maximal einigen cm oder einigen zehn cm verstanden, wie sie insbesondere durch den Standard NFC (near field communication) implementiert wird. Zur Unterscheidung wird das übliche Kurzreichweiten-Kommunikationsmodul der Onboard-Unit im weiteren als "Fernbereichs-Kommunikationsmodul" bezeichnet. Unter einer solchen Fernbereichs-Funkkommunikation wird in der vorliegenden Beschreibung eine Kommunikation über eine Funkreichweite von maximal einigen m, einigen zehn m oder einigen hundert m verstanden, wie es beispielsweise durch die Standards DSRC (dedicated short range communication), CEN-DSRC, UNI-DSRC, IEEE 802.11p bzw. WAVE (wireless access for vehicular environments) bzw. ITS-G5 einschließlich WLAN und Wifi^{®}, Bluetooth^{®} oder auch aktive und passive RFID-Technologien (radio frequency identification) implementiert wird.

Erfindungemäß greifen das Nahbereichs-Kommunikationsmodul und das Fernbereichs-Kommunikationsmodul auf einen gemeinsamen nicht-flüchtigen Speicher zu, z.B. einen Flashspeicher, wobei das Nahbereichs-Kommunikationsmodul bei seiner Verwendung die Energieversorgung des Speichers veranlasst, so dass eine Inbetriebnahme des energieintensiven Fernbereichs-Kommunikationsmoduls nicht erforderlich ist. Dadurch können zusätzliche Nahbereichs-Funktionalitäten geschaffen werden, ohne den Energiebedarf der Onboard-Unit zu erhöhen, d.h. ohne die Batterielebensdauer der Onboard-Unit nennenswert zu beeinträchtigen. Auf diese Weise können z.B. Konfigurationsdaten für die Onboard-Unit über die Nahbereichs-Funkschnittstelle eingespielt oder beliebige Daten aus der Onboard-Unit ausgelesen werden, beispielsweise Logfiles für Überprüfungen durch den Benutzer oder Behörden, ohne die Haupt- bzw. Fernbereichs-Kommunikationskomponenten der Onboard-Unit "aufzuwecken" und dadurch die Batterie zu belasten.

Das Bewirken der Energieversorgung des Speichers während des Speicherzugriffs kann dabei auf zweierlei Arten erfolgen. Zum einen kann die Energieversorgung direkt von dem speicherzugreifenden Kommunikationsmodul aus erfolgen, wenn das Kommunikationsmodul beispielsweise über eine eigene Stromversorgung (Batterie) verfügt oder direkt über Funk energieversorbar ist ("passiver Transponder"), wie ein passives NFC- oder RFID-Tag. Besonders günstig ist es, wenn das Nahbereichs-Kommunikationsmodul ein passives NFC-Tag ist, d.h. nach dem NFC-Standard arbeitet und über Funk energieversorgbar ist. NFC erfordert eine enge Nähe des externen Kommunikationsgeräts zur Onboard-Unit, um die Kommunikation aufzubauen, was dem Benutzer Sicherheit gibt, genau diese Onboard-Unit anzusprechen. Durch die Funkenergieversorgung des NFC-Tags ist gewährleistet, dass die Batterie der Onboard-Unit bei diesem Vorgang keinesfalls in Anspruch genommen wird.

Optional kann das zweite Kommunikationsmodul ein passives RFID-Tag sein, welches über Funk energieversorgbar ist, um Batterieenergie zu sparen.

Zum anderen kann das Bewirken der Energieversorgung des Speichers während des Speicherzugriffs durch ein Aktivieren bzw. Anschalten oder einer gesonderten Energieversorgung, z.B. Batterie, an den Speicher realisiert werden. Beispielsweise verfügt die Onboard-Unit über eine eigene oder externe Batterie zur Energieversorgung, und das jeweils speicherzugreifende Kommunikationsmodul, das im Kommunikationsmodus von dieser Batterie gespeist ist, steuert während des Speicherzugriffs einen Schalter an, welcher die Energieversorgung zumindest und bevorzugt nur für die Dauer des Speicherzugriffs an den Speicher anschaltet. Dies umfasst auch den Fall, dass der Schalter den Speicherzugriff detektiert ("fühlt"), z.B. auf dem Speicherzugriffsbus des Kommunikationsmoduls, um dann die Energieversorgung rechtzeitig an den Speicher anzulegen. Diese Ausführungsformen sind für jene Arten von Kommunikationsmodulen und Speicher günstig, bei welchen eine Energieversorgung über Funk nicht ausreichen würde, das Kommunikationsmodul und/oder den Speicher während des Speicherzugriffs mit genügend Energie zu versorgen.

Das Fernbereichs-Kommunikationsmodul könnte grundsätzlich von jeder in der Technik für Onboard-Units bekannten Art sein, beispielsweise ein Mobilfunkmodul für ein zellulares Mobilfunknetz (public land mobile network, PLMN). Bevorzugt ist das Fernbereichs-Kommunikationsmodul ein DSRC- oder WAVE-Modul oder ein aktives RFID-Tag, welches von der Batterie der Onboard-Unit energieversorgt ist. Alternativ könnte auch das zweite Kommunikationsmodul ausschließlich über Funkenergie versorgbar sein, z.B. in Form eines passiven RFID-Tags.

Bevorzugt ist die Onboard-Unit oder der Speicher dafür ausgebildet, einen Speicherzugriff des Fernbereichs-Kommunikationsmoduls gegenüber einem Speicherzugriff des Nahbereichs-Kommunikationsmoduls zu priorisieren. Alternativ kann das Fernbereichs-Kommunikationsmodul, wenn es sich im Kommunikationsmodus befindet, das erste Kommunikationsmodul deaktivieren. Durch diese Maßnahmen können Kollisionen beim Speicherzugriff verhindert werden: Die Fernbereichs-Funkkommunikation genießt dadurch stets höhere Priorität als die Nahbereichs-Funkkommunikation, was Fehler im Verkehrstelematiksystem verhindert.

Wie bereits kurz angesprochen enthält der Speicher bevorzugt Konfigurationsdaten für das Verkehrstelematiksystem, welche über das Nahbereichs-Kommunikationsmodul in den Speicher einschreibbar und über das Fernbereichs-Kommunikationsmodul aus dem Speicher auslesbar sind. Die Konfigurationsdaten können dabei insbesondere eines oder mehrere der folgenden Elemente sein: Benutzerkennung, Fahrzeugkennung, Mautkontokennung, Achsanzahl, Mautparameter, Ladegut-Kennzeichnung, Kontogutschrift oder Kontostand einer elektronischen Geldbörse der Onboard-Unit, kryptographische Schlüssel, Zeitstempel, insbesondere betreffend Fahrzeugbenützung. Wenn das externe Nahbereichs-Kommunikationsgerät beispielsweise ein Mobiltelefon, Smartphone od.dgl. ist, das mit einem NFC-Transceiver und einer entsprechenden Applikationssoftware ausgestattet ist, kann auf diese Weise z.B. der Kontostand der elektronischen Geldbörse der Onboard-Unit aufgeladen werden oder die Onboard-Unit überhaupt für den Betrieb konfiguriert werden.

Alternativ oder zusätzlich kann der Speicher Transaktionsdaten des Verkehrstelematiksystem enthalten, welche über das Fernbereichs-Kommunikationsmodul in den Speicher einschreibbar und über das erste Kommunikationsmodul aus dem Speicher auslesbar sind. Die Transaktionsdaten können dabei eines oder mehrere der folgenden Elemente sein: Ortsdaten, Bakenkennungen, Ladegut-Kennzeichnung, Mauttransaktionen, Parkgebührentransaktionen, Kontostand einer elektronischen Geldbörse der Onboard-Unit, kryptographische Schlüssel, Zeitstempel, insbesondere betreffend Fahrzeugbenützung. Dadurch können z.B. Logfiles, Protokolle usw. über die Nahbereichs-Funkschnittstelle ausgelesen werden, z.B. in ein NFC-fähiges Mobiltelefon oder Smartphone des Benutzers oder eines Kontrolleurs.

In einem weiteren Aspekt schafft die Erfindung eine Onboard-Anlage für ein Fahrzeug, die einerseits eine Onboard-Unit der hier vorgestellten Art umfasst, deren Speicher eine Kennung der Onboard-Unit enthält, die über das erste Kommunikationsmodul auslesbar ist, und andererseits ein von der Onboard-Unit gesondertes weiteres NFC-Tag, das eine funkauslesbare Kennung des gesonderten weiteren NFC-Tags enthält.

Die erfindungsgemäße Onboard-Anlage ermöglicht die Kontrolle der Fahrzeugbindung einer Onboard-Unit zu einem Fahrzeug. Onboard-Units der hier genannten Art werden aufgrund ihrer autarken Energieversorgung und damit der Notwendigkeit für einen gelegentlichen Batterietausch in der Regel lösbar am Fahrzeug angebracht, was die Gefahr von Manipulationen in sich birgt, wenn eine eindeutige Zuordnung zwischen Onboard-Unit einerseits und Fahrzeug andererseits gefordert wird, z.B. für Fahrzeugregistrierungs- oder Vermautungszwecke. Durch Verwendung eines gesonderten weiteren NFC-Tags, das gemeinsam mit dem Nahbereichs-Kommunikationsmodul der Onboard-Unit vom externen Kommunikationsgerät ausgelesen werden kann, können die solcherart ausgelesene Kennung der Onboard-Unit einerseits und Kennung des gesonderten Tags andererseits auf ordnungsgemäße Zuordnung überprüft werden.

Besonders günstig ist es, wenn das weitere NFC-Tag als Klebeetikett ausgebildet ist, welches nach dem Aufkleben nicht mehr zerstörungsfrei ablösbar ist. Das gesonderte NFC-Tag stellt damit eine unlösbare Fahrzeugbindung zwischen Tag-Kennung und Fahrzeug her, während die zugeordnete Kennung der Onboard-Unit für die entsprechenden Zwecke im Verkehrstelematiksystem, z.B. für Maut- oder Parkgebührenzwecke, EVR-Zwecke, Zutrittszwecke usw. verwendet werden kann.

Gemäß einer bevorzugten Variante kann der Speicher der Onboard-Unit auch die Kennung des gesonderten weiteren NFC-Tags enthalten, was die Überprüfung der NFC-Tag-Kennung erleichtert.

In noch einem weiteren Aspekt schafft die Erfindung ein externes Nahbereichs-Kommunikationsgerät für eine Onboard-Anlage der hier vorgestellten Art, welches sich dadurch auszeichnet, dass es als NFC-Lesegerät und dafür ausgebildet ist, die Kennung der Onboard-Unit aus der Onboard-Unit und die Kennung des gesonderten weiteren NFC-Tags aus dem gesonderten weiteren NFC-Tag auszulesen und gegen eine Datenbank von einander zugeordneten Onboard-Unit-Kennungen und NFC-Tag-Kennungen zu prüfen, oder dass es als NFC-Lesegerät und dafür ausgebildet ist, die Kennung des gesonderten weiteren NFC-Tags einerseits aus dem Speicher der Onboard-Unit und andererseits aus dem gesonderten weiteren NFC-Tag auszulesen und gegeneinander zu prüfen. Mit einem einzigen Gerät kann damit die Fahrzeugbindung einer - an sich lösbar - im Fahrzeug angebrachten Onboard-Unit überprüft werden, und zwar durch Co-Auslesen der Kennung des unlösbar angebrachten NFC-Tags.

In noch einem weiteren Aspekt schafft die Erfindung schließlich eine Onboard-Unit der hier vorgestellten Art, welche sich auszeichnet durch ein drittes Kommunikationsmodul, das als NFC-Lesegerät und dafür ausgebildet ist, die Kennung eines von der Onboard-Unit gesonderten weiteren NFC-Tags auszulesen und in den Speicher einzuschreiben, wobei das Fernbereichs-Kommunikationsmodul der Onboard-Unit ein DSRC-, ITS-G5- oder WAVE-Modul und dafür ausgebildet ist, die solcherart ausgelesene NFC-Tag-Kennung an ein zweites externes Kommunikationsgerät zu senden. Auch mit diesen Ausführungsformen kann die Fahrzeugbindung der Onboard-Unit verifiziert werden. Bevorzugt ist dazu das gesonderte NFC-Tag wieder als Klebeetikett ausgebildet, welches nach dem Aufkleben nicht mehr zerstörungsfrei ablösbar ist.

Bevorzugt sind das erste Kommunikationsmodul und das dritte Kommunikationsmodul durch ein gemeinsames NFC-Modul gebildet, welches zwischen einem Betriebsmodus als erstes Kommunikationsmodul und einem Betriebsmodus als drittes Kommunikationsmodul umschaltbar ist.

Die Erfindung wird nachstehend anhand von in den beigeschlossenen Zeichnungen dargestellten Ausführungsbeispielen näher erläutert. In den Zeichnungen zeigt:
Fig. 1 eine erfindungsgemäße Onboard-Anlage für ein Fahrzeug in Verbindung mit externen ersten und zweiten Kommunikationsgeräten schematisch im Überblick;
Fig. 2 eine erste Ausführungsform der Onboard-Anlage von Fig. 1 in Verbindung mit ersten und zweiten externen Kommunikationsgeräten in Blockschaltbildform;
Fig. 3 eine zweite Ausführungsform der Onboard-Unit der Erfindung in Verbindung mit externen ersten und zweiten Kommunikationsgeräten in Blockschaltbildform; und
Fig. 4 eine dritte Ausführungsform der Onboard-Unit der Erfindung in Verbindung mit externen ersten und zweiten Kommunikationsgeräten in Blockschaltbildform.

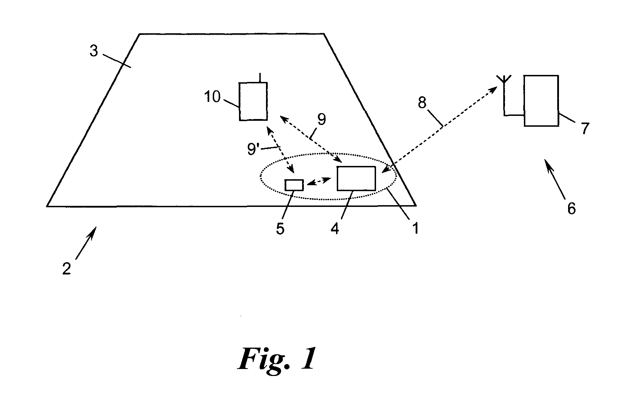

Fig. 1 zeigt eine Onboard-Anlage 1 für ein Fahrzeug 2, von dem ausschnittsweise nur seine Windschutzscheibe 3 gezeigt ist. Die Onboard-Anlage 1 ist im oder am Fahrzeug 2 anbringbar, beispielsweise auf die Innenseite der Windschutzscheibe 3 geklebt. Die Onboard-Anlage 1 umfasst eine Onboard-Unit 4 und ein davon gesondertes NFC-Tag (near field communication tag) 5, auf dessen Funktion weiter unten noch näher eingegangen wird.

Die Onboard-Unit 4 dient zur Funkkommunikation mit einem Verkehrstelematiksystem 6, von dem stellvertretend und beispielhaft nur ein Kommunikationsgerät in Form einer straßenseitige Funkbake 7 (roadside entity, RSE) gezeigt ist. Die Funkbake 7 kann sowohl stationär als auch mobil sein, z.B. auf einem Kontrollfahrzeug angeordnet oder als Handgerät für einen Kontrolleur ausgebildet, und wickelt über einen Transceiver 7' Funkkommunikationen 8 mit der Onboard-Unit 4 ab, z.B. wenn das Fahrzeug 2 die Funkbake 7 passiert oder umgekehrt.

Die Funkbake 7 kann, wenn der Funkabdeckungsbereich ihrer Funkkommunikationen 8 auf ein lokales Gebiet begrenzt ist, die Onboard-Unit 4 auf dieses Gebiet verorten, beispielsweise um eine Ortsnutzung des Fahrzeugs 2 in Form von Straßen-, Zutritts-, Gebiets- oder City-Maut zu vergebühren, eine Parkgebühr einzuheben, eine Zutrittsschranke freizugeben oder um eine aus der Onboard-Unit 4 ausgelesene Kennung des Fahrzeugs 2, seines Benutzers usw. zu registrieren usw. usf.

Die Onboard-Unit 4 der Onboard-Anlage 1 ist ferner befähigt, über eine weitere Funkschnittstelle 9 Funkkommunikationen mit einem weiteren externen Kommunikationsgerät 10 des Benutzers abzuwickeln. Das Kommunikationsgerät 10 kann beispielsweise ein Mobiltelefon, Smartphone, Notebook- oder Tablet-PC, Personal Digital Assistant (PDA) usw. des Benutzers des Fahrzeugs oder eines Kontrolleurs sein. Das Kommunikationsgerät 10 kann ferner weitere Funkkommunikationen 9' mit dem gesonderten NFC-Tag 5 abwickeln.

Die Funkkommunikationen 9, 9' zwischen dem ("ersten") externen Kommunikationsgerät 10 und der Onboard-Anlage 1, d.h. der Onboard-Unit 4 und dem NFC-Tag 5, sind ausschließlich für den Nahbereich ausgelegt, d.h. ihre Funkreichweite ist auf einige cm oder einige zehn cm begrenzt, so dass das Kommunikationsgerät 10 in unmittelbare Nähe der Onboard-Unit 4 und des NFC-Tags 5 gebracht werden muss, um die Funkkommunikationen 9, 9' durchführen zu können. Im Gegensatz dazu sind die Funkkommunikationen 8 zwischen der Onboard-Unit 4 und dem ("zweiten") externen Kommunikationsgerät 7 von im Vergleich dazu wesentlich größerer Reichweite, z.B. einige m, einige zehn m oder einige hundert m, so dass sie hier auch als "Fernbereichs"-Funkkommunikationen 8 bezeichnet werden, obwohl es sich dabei weiterhin um Kurzreichweitenfunk handelt, z.B. nach Kurzreichweiten-Funkstandards wie DSRC (dedicated short range communication), CEN-DSRC, UNI-DSRC, WAVE (wireless access for vehicular environments) bzw. IEEE 802.11p, ITS-G5, WLAN (wireless local area network), Wifi^{®}, Bluetooth^{®}, RFID (radio frequency identification) od.dgl.

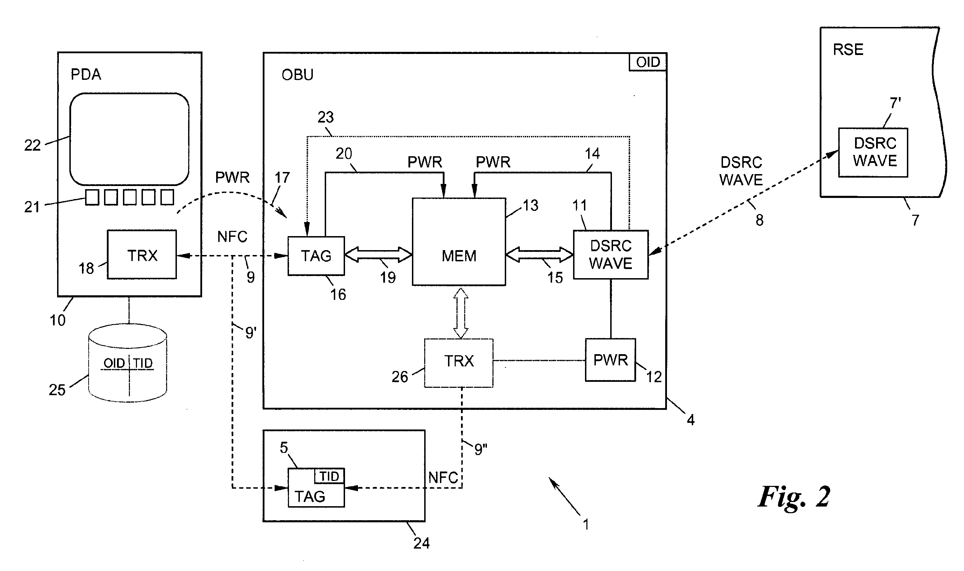

Fig. 2 zeigt den Aufbau der Onboard-Anlage 1, des ersten Kommunikationsgeräts 10 und des zweiten Kommunikationsgeräts 7 zur Abwicklung der Funkkommunikationen 9, 9' und 8 im Detail. Für die Fernbereichs-Funkkommunikationen 8 mit den zweiten Kommunikationsgeräten 7, z.B. Funkbaken, enthält die Onboard-Unit 4 ein entsprechendes Fernbereichs-Kommunikationsmodul 11 nach dem jeweiligen Kurzreichweiten-Funkstandard DSRC, CEN-DSRC, UNI-DSRC, WAVE, IEEE 802.11p, ITS-G5, WLAN, Wifi^{®}, Bluetooth^{®} oder RFID, welches von einer Batterie 12 der Onboard-Unit 4 energieversorgt ist (ein Kommunikationsmodul 11 nach dem RFID-Standard, das eine solche Energieversorgung 12 benötigt, wird hier auch als "aktives" RFID-Tag bezeichnet). Die Batterie 12 kann auch Teil einer mit der Onboard-Unit 4 über ein Kabel verbundenen Einrichtung sein.

Das Fernbereichs-Kommunikationsmodul 11 der Onboard-Unit 4 kann zur Vorbereitung, Generierung bzw. Verarbeitung der Funkkommunikationen 8, genauer der darin gesendeten und/oder empfangenen Datenpakete, auf einen Speicher 13 der Onboard-Unit 4 zugreifen, welcher Konfigurations- und/oder Transaktionsdaten hiefür enthält. Beispielsweise enthält der Speicher 13 Konfigurationsdaten für das korrekte Funktionieren der Onboard-Unit 4 im Verkehrstelematiksystem 6, oder Gutschriften für die genannten Konten, wie eines oder mehrere der folgenden Elemente: eine eindeutige Kennung der Onboard-Unit 4 (OBU-Kennung), eine Benutzerkennung des Fahrers des Fahrzeugs 2, eine Fahrzeugkennung des Fahrzeugs 2, eine Kennung eines Maut- oder Gebührenkontos des Benutzers oder des Fahrzeugs, Fahrzeugparameter wie Achsanzahl, Gewicht, Größe, Einsatzweck usw. des Fahrzeugs 2, mautoder parkgebührenspezifische Parameter wie Gebührenklasse, Insassenanzahl oder die genannten Fahrzeugparameter, usw. usf. Die Konfigurationsdaten können auch Daten, insbesondere den Kontostand, einer "elektronischen Geldbörse" in der Onboard-Unit 4 oder eines Kredit- oder Debitkontos im Verkehrstelematiksystem 6 enthalten, oder Gutschriften für die genannten Konten. Die Konfigurationsdaten können ferner auch Ladegut-Kennzeichnungen sein, sodass der Inhalt des Speichers 13 ein Ladegut-Protokoll bildet; kryptographische Schlüssel für verschlüsselte Kommunikationen über die Kommunikationsmodule; und/oder Zeitstempel, insbesondere durch den Fahrzeugfahrer zur zeitlichen Kontrolle der Fahrzeugbenützung, sodass die Onboard-Unit einen "elektronischen Tachographen" bildet. Für eine solche Zeitstempel-Erfassung ist eine OBU-interne Uhr vorteilhaft, die gegebenenfalls durch die Nahbereichs- und/oder Fernbereichs-Funkkommunikationen 9, 8 von den Kommunikationsgeräten 10, 7 synchronisiert werden kann, beispielsweise bei Funkbakenpassagen.

Zusätzlich oder alternativ kann der Speicher 13 Transaktionsdaten enthalten, welche er während des Betriebs der Onboard-Unit 4 im Verkehrstelematiksystem 6 erhält bzw. sammelt, z.B. eines oder mehrere der folgenden Elemente: Ortsdaten, welche die Onboard-Unit 4 selbst aufzeichnet oder von Funkbaken 7 erhält, Bakenkennungen von Funkbaken 7, welche sie passiert, Kennungen von Kommunikationsgeräten 7, denen sie begegnet, Maut- bzw. Parkgebührentransaktionen, die jeweils im Zuge von Fernbereichs-Funkkommunikationen 8 erzeugt werden, z.B. bei der Passage einer straßenseitigen Funkbake 7, Transaktionen, welche den Kontostand einer elektronischen Geldbörse der Onboard-Unit 4 oder eines Kredit- oder Debitkontos im Verkehrstelematiksystem 6 beeinflussen oder wiedergeben, z.B. Abbuchungstransaktionen, oder auch Ladegut-Kennzeichnungen, Gefahrengut-Deklarationen od. dgl. Auch die Transaktionsdaten können mit entsprechenden Zeitstempeln, wie zuvor für die Konfigurationsdaten erörtert, versehen werden.

Eine Fernbereichs-Funkkommunikation 8 kann eine direkte Aktivierung des Fernbereichs-Kommunikationsmodul 11 bewirken und dort eine Verarbeitung - z.B. eine Signierung von Daten im sicheren Umfeld der Onboard-Unit 4 - auslösen. Diese verarbeiteten Daten können dann z.B. sogleich wieder über eine Nahbereichs-Funkkommunikation 9 ausgelesen werden.

Es versteht sich, dass die Onboard-Unit 4 hiefür nur stark vereinfacht dargestellt ist; weitere Komponenten wie Prozessoren, Hard- oder Softwaremodule usw., die für das hier beschriebene Zusammenspiel des Kommunikationsmoduls 11 und des Speichers 13 und der Abwicklung der hier genannten Funkkommunikationen 8, 9 erforderlich sind, sind zwecks Übersichtlichkeit nicht dargestellt.

Wie durch den Pfeil 14 sinnbildlich dargestellt, kann die Stromversorgung des Speichers 13 während des Schreib- und/oder Lesezugriffs (15) des Kommunikationsmoduls 11 auf den Speicher 13 vom Kommunikationsmodul 11 - und in der in Fig. 2 gezeigten Ausführungsform damit von der Batterie 12 aus - erfolgen. Es versteht sich, dass der Pfeil 14 hier nur symbolisch ist; beispielsweise kann die Stromversorgung des Speichers 13 direkt von der Batterie 12 aus erfolgen und der Speicher 13 während des Speicherzugriffs 15 entsprechend vom Kommunikationsmodul 11 gesteuert stromversorgt werden.

Um Energie zu sparen und die Lebensdauer der Batterie 12 zu maximieren, ist die Onboard-Unit 4, insbesondere ihr Fernbereich-Kommunikationsmodul 11, zwischen einem energiesparenden bzw. energielosen Ruhemodus und einem energieversorgten bzw. energiezehrenden Kommunikationsmodus umschaltbar. Mit anderen Worten verfällt die Onboard-Unit 4 bzw. zumindest ihr Fernbereichs-Kommunikationsmodul 11 in den Pausen zwischen zeitlich voneinander beabstandeten Fernbereichs-Funkkommunikationen 8 in einen energielosen oder energiesparenden Schlaf- bzw. Ruhemodus, aus dem sie beispielsweise durch eine neuerliche Funkkommunikation 8, die vom zweiten Kommunikationsgerät 7 ausgeht, wieder aufgeweckt wird.

Um diese Energiesparfunktion nicht zu beeinträchtigen und die Lebensdauer der Batterie 12 nicht zu verkürzen, weist die Onboard-Unit 4 für Nahbereichs-Funkkommunikationen 9 ein gesondertes Nahbereichs-Kommunikationsmodul 16 auf, das über die Funkkommunikationen 9 vom ersten externen Kommunikationsgerät 10, z.B. einem Mobiltelefon des Benutzers, her mit Energie versorgbar ist (Pfeil 17). Das Kommunikationsgerät 10 verfügt dazu über ein für Nahbereichs-Funkkommunikationen 9 ausgelegtes Lese-/Schreibgerät (Transceiver) 18, beispielsweise ein NFC-Lese- und/oder -Schreibgerät. Das Nahbereichs-Kommunikationsmodul 16 hat damit seinerseits einen "energielosen" Ruhemodus, wenn es nicht vom Kommunikationsgerät 10 angesprochen und von dort mit Energie versorgt wird, und einen energieversorgten Kommunikationsmodus, in welchem es mittels einer Nahbereichs-Funkkommunikation 9 angesprochen und dabei gleichzeitig mit Energie aus dem Transceiver 18 versorgt wird (Pfeil 17).

Ein Nahbereichs-Kommunikationsmodul 16 dieser Art kann beispielsweise als passives NFC-Tag realisiert sein, wobei "passiv" bedeutet, dass es über eine Funkkommunikation 9 mit Energie versorgt wird. Passive NFC-Tags können auch als passive RFID-Transponder für extrem kurze Funkreichweiten von einigen cm bis einigen zehn cm betrachtet werden.

Sobald das Nahbereichs-Kommunikationsmodul 16 sich im funkenergieversorgten Kommunikationsmodus befindet, kann es auf den Speicher 13 zugreifen (Pfeil 19) und dabei den Speicher 13 mit Energie versorgen (Pfeil 20). Dies ist unabhängig davon, ob sich das Fernbereichs-Kommunikationsmodul 11 in Kommunikations- oder Ruhemodus befindet und seinerseits den Speicher 13 mit Energie versorgt (14) oder nicht, oder ob sich die gesamte restliche Onboard-Unit 4 im Ruhe- oder Betriebsmodus befindet. Über die Nahbereichs-Funkkommunikation 9 und das passive Kommunikationsmodul 16 kann somit der Inhalt des Speichers 13 gelesen und/oder geschrieben werden, unabhängig davon, ob die Onboard-Unit 4 und/oder ihr Fernbereichs-Kommunikationsmodul 11 arbeitet oder schläft.

Auf diese Weise können z.B. im Speicher 13 enthaltene Konfigurationsdaten der Onboard-Unit 4 vom Kommunikationsgerät 10 eingespeist oder verändert werden, beispielsweise eine Benutzerkennung eingegeben, eine Achsanzahl des Fahrzeugs eingestellt werden usw. Das Nahbereichs-Kommunikationsgerät 10 dient dabei gleichsam als "Eingabeeinrichtung" für die Onboard-Unit 4. Dazu braucht es lediglich in unmittelbare Nähe der Onboard-Unit 4 gehalten zu werden, um über Nahbereichs-Funkkommunikationen 9 Daten in den Speicher 13 einzuspielen, selbst wenn die Onboard-Unit 4 bzw. ihr Kommunikationsmodul 11 sich im energielosen bzw. energiesparenden Ruhemodus befindet. Das Kommunikationsgerät 10 kann dazu eine physische Tastatur 21 oder virtuelle Tasten auf einem Touchscreen 22 haben.

In gleicher Weise können über Nahbereichs-Funkkommunikationen 9 auch Transaktionsdaten aus dem Speicher 13 in das Kommunikationsgerät 10 hin ausgelesen werden, beispielsweise Logfiles über vergangene Ortsnutzungen, Maut- und Parkgebührentranksaktionen, Abbuchungstransaktionen, Kontostände usw. In diesem Sinne kann das Kommunikationsgerät 10 gleichsam als "Ausgabeeinrichtung" für die Onboard-Unit 4 herangezogen werden und deren Daten anzeigen, z.B. auf der Anzeige 22, ohne dass die Onboard-Unit 4 dazu einer eigenen Anzeige bedürfte. Die genannten Transaktionsdaten (Logfiles, Protokolle) können beispielsweise auch Ladegut von LKWs beschreiben, d.h. jede geladene Fracht wird in der Onboard-Unit 4 deklariert und bei Bedarf auch elektronisch durch die Onboard-Unit 4 signiert, wenn diese durch eine physische und elektronische Zugriffskontrolle eine vertrauenswürdige Umgebung darstellt. Eine Signierung durch die Onboard-Unit 4 kann z.B. erfolgen, indem eine spezielles Schreibkommando vom Nahbereichs-Kommunikationsmodul 16 erfolgt oder ein spezieller Speicherbereich des Speichers 13 adressiert wird, der eine nachfolgende Verarbeitung durch das Fernbereichs-Kommunikationsmodul 11 veranlasst. Die Verarbeitung durch das Fernbereichs-Kommunikationsmodul 11 kann z.B. besonders vertrauenswürdig gehalten werden, wenn erhöhte Mechanismen in der physischen und elektronischen Zugriffskontrolle realisiert werden.

In einer weiteren Ausführung wird nur ein Teil des gesamten Speichers 13 dem Nahbereichs-Kommunikationsmodul 16 zum Lesen und Schreiben zur Verfügung gestellt, andere Speicherbereiche sind ggf. zusätzlich durch physische und/oder kryptographische Zugriffsmechanismen geschützt. Der Speicher 13 kann somit auch aus mehreren physisch oder logisch getrennten Speicher-Modulen zusammengesetzt werden.

Um zu gewährleisten, dass die Fernbereichs-Kommunikationen 8, welche die Onboard-Unit 4 mit den Kommunikationsgeräten 7, z.B. Funkbaken, im Rahmen des Verkehrstelematiksystems 6 abwickeln, von der genannten Nahbereichs-Kommunikationsfunktionalität nicht beeinträchtigt werden, kann optional realisiert sein, dass die Speicherzugriffe 15 des Fernbereichs-Kommunikationsmoduls 11 gegenüber den Speicherzugriffen 19 des Nahbereichs-Kommunikationsmoduls 16 priorisiert werden, beispielsweise durch entsprechende Ausbildung des Speichers 13 oder Programmierung des (nicht dargestellten) Prozessors der Onboard-Unit 4. Alternativ könnte das Fernbereichs-Kommunikationsmodul 11, wenn es sich im Kommunikationsmodus befindet, direkt das Nahbereichs-Kommunikationsmodul 16 deaktivieren (siehe Pfeil 23), um seine Priorität zu sichern.

Die Nahbereichs-Kommunikationfähigkeit des Kommunikationsgeräts 10 und der Onboard-Unit 4 kann in weiterer Folge dazu ausgenützt werden, die Fahrzeugbindung einer Onboard-Unit 4 - welche nicht zuletzt wegen der Notwendigkeit, hin und wieder die Batterie 12 austauschen zu müssen, meist lösbar im Fahrzeug 2 angebracht wird - gegenüber dem Fahrzeug 2 abzusichern. Dazu dient das gesonderte NFC-Tag 5, das gemeinsam mit der Onboard-Unit 4 die genannte Onboard-Anlage 1 bildet.

Das gesonderte NFC-Tag 5 ist beispielsweise als Klebeetikett 24 ausgebildet, welches nach dem Aufkleben auf die Windschutzscheibe 3 nicht mehr zerstörungsfrei von dieser ablösbar ist und dadurch eine permanente Fahrzeugbindung hat.

Das gesonderte NFC-Tag 5 ist mit einer funkauslesbaren eindeutigen Kennung TID ausgestattet, welche vom Nahbereichs-Kommunikationsgerät 10 im Zuge einer weiteren Nahbereichs-Funkkommunikation 9' auslesbar ist. Wenn das Klebeetikett 24 und die Onboard-Unit 4 in enger Nachbarschaft am Fahrzeug 2 angebracht sind, können durch bloßes Hinhalten des Kommunikationsgeräts 10 Nahbereichs-Funkkommunikationen 9, 9' sowohl mit dem NFC-Tag 16 der Onboard-Unit 4 als auch dem gesonderten NFC-Tag 5 des Klebeetiketts 24 errichtet werden und gleichzeitig oder unmittelbar aufeinanderfolgend die Kennung OID der Onboard-Unit 4 und die Kennung TID des weiteren NFC-Tags 5 ausgelesen und auf der Anzeige 22 angezeigt werden.

Der Benutzer des Nahbereichs-Kommunikationsgeräts 10, z.B. ein Kontrolleur, kann dadurch überprüfen, ob die Kennungen TID und OID im Verkehrstelematiksystem 6 als einander zugeordnet registriert wurden, beispielsweise durch Überprüfen einer Liste. Bevorzugt erfolgt dies automatisch, indem das Kommunikationsgerät 10 Zugriff auf eine geräteinterne oder externe, z.B. in einer Zentrale des Verkehrstelematiksystems 6 vorliegende Datenbank 25 von Onboard-Unit-Kennungen OID und zugeordneten NFC-Tag-Kennungen TID hat, anhand deren die Fahrzeugbindung der Onboard-Unit 4, d.h. ihre Verwendung im richtigen, mit dem entsprechenden NFC-Tag 5 ausgestatteten Fahrzeug 2 überprüft werden kann.

Optional kann die NFC-Tag-Kennung TID des gesonderten NFC-Tags 5 auch in der Onboard-Unit 4 gespeichert werden, beispielsweise im Speicher 13 anlässlich der Ausgabe bzw. Personalisierung der Onboard-Unit 4 unter gleichzeitiger Ausgabe des jeweiligen NFC-Tags 5, so dass über die Nahbereichs-Funkkommunikation 9 nicht nur die Onboard-Unit-Kennung OID, sondern auch die dazu gespeicherte NFC-Tag-Kennung TID ausgelesen und mit der vom Klebeetikett 24 über die Nahbereichs-Funkkommunikation 9' abgefragten NFC-Tag-Kennung TID verglichen werden kann. Dadurch kann z.B. auch ohne Zugriff auf die Datenbank 25 die korrekte Verwendung der Onboard-Unit 4 überprüft werden.

Eine weitere Möglichkeit besteht darin, die Onboard-Unit 4 mit einem eigenen NFC-Lese- und/oder -Schreibgerät (Transceiver) 26 auszustatten. Der Transceiver 26 kann seinerseits über eine weitere Nahbereichs-Funkkommunikation 9" das in der Nähe angebrachte weitere NFC-Tag 5 abfragen und dessen NFC-Tag-Kennung TID in dem Speicher 13 hin auslesen. Die ausgelesene NFC-Tag-Kennung TID kann dann beispielsweise zusammen mit der Onboard-Unit-Kennung OID über eine Fernbereichs-Funkkommunikation 8 an das Kommunikationsgerät 7, z.B. eine Funkbake, gemeldet werden. Dadurch kann z.B. auch bei der Passage einer Funkbake 7 des Verkehrstelematiksystems 6 jeweils die korrekte Fahrzeugbindung der Onboard-Unit 4, d.h. ihr richtiger Einsatz im richtigen Fahrzeug 2, überprüft werden.

Der NFC-Transceiver 26 kann auch gemeinsam mit dem NFC-Tag 16 durch ein und dasselbe physische Gerät realisiert werden, beispielsweise ein NFC-Modul, das wahlweise in einen NFC-Tag-Betriebsmodus zur Emulierung des NFC-Tags 16 und einen NFC-Transceiver-Betriebsmodus zur Emulierung des NFC-Lese- und/oder Schreibgeräts bzw. NFC-Transceivers 26 umgeschaltet werden kann. Die Umschaltung kann beispielsweise auf Aufforderung von einem der Kommunikationsgeräte 7, 10 aus erfolgen.

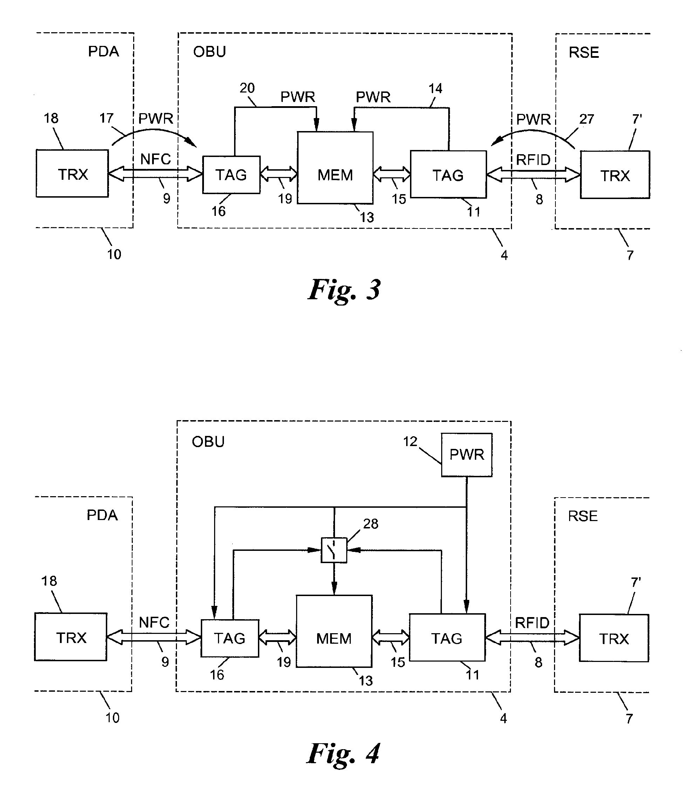

Fig. 3 zeigt eine Variante der Ausführungsform von Fig. 2, bei welcher auch das Fernbereichs-Kommunikationsmodul 11 über Funk mit Energie versorgbar ist, und zwar über die Fernbereichs-Funkkommunikation 8 (Pfeil 27). Die Fernbereichs-Funkkommunikation 8 kann hier beispielsweise nach dem RFID-Standard erfolgen und das Fernbereichs-Kommunikationsmodul 11 ist dann ein passiver Transponder, z.B. ein passives RFID-Tag. Auch dieses kann - wenn es sich im energieversorgten Kommunikationsmodus befindet - über den (symbolischen) Weg 14 den Speicher 13 beim Speicherzugriff 15 mit Energie versorgen.

Die übrigen in Fig. 3 dargestellten Komponenten entsprechen dem Aufbau von Fig. 2. Wie ersichtlich kann das gesonderte NFC-Tag 5 bzw. das Klebeetikett 24 auch entfallen, ebenso die Batterie 12 für das Fernbereichs-Kommunikationsmodul 11; gegebenenfalls können weitere (nicht dargestellte) Komponenten der Onboard-Unit 4 weiterhin eine Batterie 12 verwenden.

Fig. 4 zeigt eine Variante der Ausführungsformen der Fig. 2 und 3, bei welcher das Nahbereichs- und/oder das Fernbereichs-Kommunikationsmodul 16, 11 den Speicher 13 nicht direkt von sich aus (z.B. über ihre eigene Funk-Engergieversorgung) mit Energie versorgen, sondern während des Speicherzugriffs 19, 15 lediglich die Anschaltung der Stromversorgung bzw. Batterie 12 an den Speicher 13 (bzw. den dafür genutzten Teil des Speichers 13) bewirken. Zu diesem Zweck ist mit 28 ein Schalter gezeigt, welcher vom Kommunikationsmodul 16 und/oder vom Kommunikationsmodul 11 gesteuert wird und die Anschaltung der Batterie 12 an den Speicher 13 zumindest - und bevorzugt auch nur - für die Dauer eines Speicherzugriffs 19 bzw. 15 veranlasst.

Es versteht sich, dass der Schalter 28 nur symbolisch ist; beispielsweise kann die entsprechende Energieversorgung des Speichers 13 während des Speicherzugriffs 19 bzw. 15 direkt vom jeweiligen Kommunikationsmodul 16, 11 erfolgen, welches seinerseits im Kommunikationsmodus von der Batterie 12 gespeist ist. Auch ist es möglich, dass der Schalter 28 den Speicherzugriff 19 bzw. 15 eines Kommunikationsmoduls 16 bzw. 11 von sich aus detektiert, z.B. auf der Speicherzugriffs-Schnittstelle des jeweiligen Kommunikationsmoduls 16, 11, um dann rechtzeitig für den Speicherzugriff 19 bzw. 15 die Batterie 12 an den Speicher 13 anzuschalten. Alle diese Varianten der Energieversorgung des Speichers 13 während des Speicherzugriffs des jeweiligen Kommunikationsmoduls 16, 11 werden hier von dem Begriff "Bewirken der Energieversorgung" des Speichers 13 während des Zugriffs 19, 15 durch das jeweilige Kommunikationsmodul 16, 11 mitumfasst.

Die Erfindung ist nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Onboard-Unit (4) für ein Verkehrstelematiksystem (6), umfassend:
ein erstes Kommunikationsmodul (16), ausgebildet zur Nahbereichs-Funkkommunikation (9) mit einem ersten externen Kommunikationsgerät (10),
ein zweites Kommunikationsmodul (11), ausgebildet zur Fernbereichs-Funkkommunikation (8) mit einem zweiten externen Kommunikationsgerät (7), und
einen nicht-flüchtigen Speicher (13), auf welchen sowohl das erste als auch das zweite Kommunikationsmodul (16, 11) Zugriff (19, 25) nehmen kann,
wobei jedes Kommunikationsmodul (16, 11) einen energieversorgten Kommunikationsmodus und einen energielosen oder -sparenden Ruhemodus hat und
wobei die Energieversorgung des Speichers (13) während des Zugriffs (19, 15) darauf durch das jeweils zugreifende Kommunikationsmodul (16, 11) bewirkt ist.

2. Onboard-Unit nach Anspruch 1, **dadurch gekennzeichnet, dass** die Energieversorgung des Speichers (13) während des Zugriffs (19, 15) zumindest eines Kommunikationsmoduls (16, 11) von diesem selbst aus erfolgt.

3. Onboard-Unit nach Anspruch 1 oder 2, **dadurch gekennzeichnet, dass** das erste Kommunikationsmodul (16) ein passives NFC-Tag ist, welches über Funk energieversorgbar ist.

4. Onboard-Unit nach einen der Ansprüche 1 bis 3, **dadurch gekennzeichnet, dass** das zweite Kommunikationsmodul (11) ein passives RFID-Tag ist, welches über Funk energieversorgbar ist.

5. Onboard-Unit nach einen der Ansprüche 1 bis 4, **dadurch gekennzeichnet, dass** die Energieversorgung des Speichers (13) während des Zugriffs (19, 15) zumindest eines Kommunikationsmoduls (16, 11) von einer Batterie (12) aus erfolgt, welche über einen von diesem Kommunikationsmodul (16, 11) gesteuerten Schalter (12') für die Dauer des Zugriffs (19, 15) an den Speicher (12) anschaltbar ist.

6. Onboard-Unit nach einen der Ansprüche 1 bis 5, **dadurch gekennzeichnet, dass** das zweite Kommunikationsmodul (11) ein DSRC-, ITS-G5 oder WAVE-Modul oder ein aktives RFID-Tag ist, welches von einer Batterie (12) der Onboard-Unit (4) energieversorgt ist.

7. Onboard-Unit nach einem der Ansprüche 1 bis 6, **dadurch gekennzeichnet, dass** die Onboard-Unit (4) oder der Speicher (13) dafür ausgebildet ist, einen Speicherzugriff (15) des zweiten Kommunikationsmoduls (11) gegenüber einem Speicherzugriff des ersten Kommunikationsmoduls (16) zu priorisieren.

8. Onboard-Unit nach einem der Ansprüche 1 bis 6, **dadurch gekennzeichnet, dass** das zweite Kommunikationsmodul (11), wenn es sich im Kommunikationsmodus befindet, das erste Kommunikationsmodul (16) deaktiviert.

9. Onboard-Unit nach einem der Ansprüche 1 bis 8, **dadurch gekennzeichnet, dass** der Speicher (13) Konfigurationsdaten für das Verkehrstelematiksystem (6) enthält, welche über das erste Kommunikationsmodul (16) in den Speicher (13) einschreibbar und über das zweite Kommunikationsmodul (11) aus dem Speicher (13) auslesbar sind, wobei bevorzugt die Konfigurationsdaten eines oder mehrere der Elemente: Benutzerkennung, Fahrzeugkennung, Mautkontokennung, Achsanzahl, Mautparameter, Ladegut-Kennzeichnung, Kontogutschrift oder Kontostand einer elektronischen Geldbörse der Onboard-Unit, kryptographische Schlüssel, Zeitstempel, enthalten.

10. Onboard-Unit nach einem der Ansprüche 1 bis 9, **dadurch gekennzeichnet**, **dadurch gekennzeichnet, dass** der Speicher (13) Transaktionsdaten des Verkehrstelematiksystem (6) enthält, welche über das zweite Kommunikationsmodul (11) in den Speicher (13) einschreibbar und über das erste Kommunikationsmodul (16) aus dem Speicher (13) auslesbar sind, wobei bevorzugt die Transaktionsdaten eines oder mehrere der Elemente: Ortsdaten, Bakenkennungen, Ladegut-Kennzeichnung, Mauttransaktionen, Parkgebührentransaktionen, Kontostand einer elektronischen Geldbörse der Onboard-Unit, kryptographische Schlüssel, Zeitstempel, enthalten.

11. Onboard-Anlage (1) für ein Fahrzeug (2), umfassend:
eine Onboard-Unit (4) nach einem der Ansprüche 1 bis 10, die die zusätzlichen Merkmale des Anspruchs 3 enthält und deren Speicher (13) eine Kennung (OID) der Onboard-Unit (4) enthält, welche über das erste Kommunikationsmodul (16) auslesbar ist, und
ein von der Onboard-Unit (4) gesondertes weiteres NFC-Tag (5), das eine funkauslesbare Kennung (TID) des gesonderten weiteren NFC-Tags (5) enthält.

12. Onboard-Anlage nach Anspruch 11, **dadurch gekennzeichnet, dass** das gesonderte weitere NFC-Tag (5) als Klebeetikett (24) ausgebildet ist, welches nach dem Aufkleben nicht mehr zerstörungsfrei ablösbar ist.

13. Onboard-Anlage nach Anspruch 11 oder 12, **dadurch gekennzeichnet, dass** der Speicher (13) der Onboard-Unit (4) auch die Kennung (TID) des gesonderten weiteren NFC-Tags (5) enthält.

14. Anlage, umfassend eine Onboard-Anlage (1) nach Anspruch 11 oder 12 und ein dazu externes erstes Kommunikationsgerät (10), welches als NFC-Lesegerät und dafür ausgebildet ist, die Kennung (OID) der Onboard-Unit (4) aus der Onboard-Unit (4) und die Kennung (TID) des gesonderten weiteren NFC-Tags (5) aus dem gesonderten weiteren NFC-Tag (5) auszulesen und gegen eine Datenbank (25) von einander zugeordneten Onboard-Unit-Kennungen (OID) und NFC-Tag-Kennungen (TID) zu prüfen.

15. Anlage, umfassend eine Onboard-Anlage (1) nach Anspruch 13 und ein dazu externes erstes Kommunikationsgerät (10), welches als NFC-Lesegerät und dafür ausgebildet ist, die Kennung des gesonderten weiteren NFC-Tags (5) einerseits aus dem Speicher (13) der Onboard-Unit (4) und andererseits aus dem gesonderten weiteren NFC-Tag (5) auszulesen und gegeneinander zu prüfen.

16. Onboard-Unit nach Anspruch 1, **gekennzeichnet durch** ein drittes Kommunikationsmodul (26), das als NFC-Lesegerät und dafür ausgebildet ist, eine Kennung (TID) eines von der Onboard-Unit (4) gesonderten weiteren NFC-Tags (5) auszulesen und in den Speicher (13) einzuschreiben, und dass das zweite Kommunikationsmodul (11) ein DSRC-, ITS-G5- oder WAVE-Modul und dafür ausgebildet ist, die genannte Kennung an ein zweites externes Kommunikationsgerät (7) zu senden, wobei bevorzugt das gesonderte NFC-Tag (5) als Klebeetikett (25) ausgebildet ist, welches nach dem Aufkleben nicht mehr zerstörungsfrei ablösbar ist.

17. Onboard-Unit nach Anspruch 16, **dadurch gekennzeichnet, dass** das erste Kommunikationsmodul (16) und das dritte Kommunikationsmodul (26) durch ein gemeinsames NFC-Modul gebildet sind, welches zwischen einem Betriebsmodus als erstes Kommunikationsmodul (16) und einem Betriebsmodus als drittes Kommunikationsmodul (26) umschaltbar ist.

## Claims

1. An onboard unit (4) for a traffic telematics system (6), comprising:
a first communication module (16), designed for near-range radio communication (9) with a first external communication device (10),
a second communication module (11), designed for far-range radio communication (8) with a second external communication device (7), and
a non-volatile memory (13), which can be accessed (19, 25) both by the first and second communication module (16, 11),
wherein each communication module (16, 11) has a power-supplied communication mode and a powerless or power-saving rest mode, and
wherein the power supply of the memory (13) during an access (19, 15) thereto is effected by the accessing communication module (16, 11).

2. The onboard unit according to Claim 1, **characterised in that** power is supplied to the memory (13) during the access (19, 15) of at least one communication module (16, 11) by this module itself.

3. The onboard unit according to Claim 1 or 2, **characterised in that** the first communication module (16) is a passive NFC tag to which power can be supplied via radio.

4. The onboard unit according to one of Claims 1 to 3, **characterised in that** the second communication module (11) is a passive RFID tag to which power can be supplied via radio.

5. The onboard unit according to one of Claims 1 to 4, **characterised in that** power is supplied to the memory (13) during the access (19, 15) of at least one communication module (16, 11) by a battery (12) which can be switched on via a switch (12') controlled by this communication module (16, 11) for the duration of the access (19, 15) to the memory (13).

6. The onboard unit according to one of Claims 1 to 5, **characterised in that** the second communication module (11) is a DSRC, ITS-G5 or WAVE module or an active RFID tag to which power is supplied by a battery (12) of the onboard unit (4).

7. The onboard unit according to one of Claims 1 to 6, **characterised in that** the onboard unit (4) or the memory (13) is designed to prioritise a memory access (15) of the second communication module (11) over a memory access of the first communication module (16).

8. The onboard unit according to one of Claims 1 to 6, **characterised in that** the second communication module (11), if in the communication mode, deactivates the first communication module (16).

9. The onboard unit according to one of Claims 1 to 8, **characterised in that** the memory (13) contains configuration data for the traffic telematics system (6) which can be written into the memory (13) via the first communication module (16) and read out from the memory (13) via the second communication module (11), wherein the configuration data preferably contains one or more of the following elements: user identification, vehicle identification, tolling account identification, axle number, tolling parameters, load designation, account credit or account balance of an electronic purse of the onboard unit, cryptographic keys or timestamps.

10. The onboard unit according to one of Claims 1 to 9, **characterised in that** the memory (13) contains transaction data of the traffic telematics system (6) which can be written into the memory (13) via the second communication module (11) and read out from the memory (13) via the first communication module (16), wherein the transaction data preferably contains one or more of the following elements: location data, beacon identifications, load designation, tolling transactions, parking fee transactions, account balance of an electronic purse of the onboard unit, cryptographic keys or timestamps.

11. An onboard system (1) for a vehicle (2), comprising:
an onboard unit (4) according to one of Claims 1 to 10, which comprises the additional features of Claim 3 and of which the memory (13) contains an identification (OID) of the onboard unit (4) which can be read out via the first communication module (16), and
a further NFC tag (5), separate from the onboard unit (4), which contains a radio-readable identification (TID) of the separate further NFC tag (5).

12. The onboard system according to Claim 11, **characterised in that** the separate further NFC tag (5) is formed as an adhesive label (24), which, once adhered, can no longer be detached without being destroyed.

13. The onboard system according to Claim 11 or 12, **characterised in that** the memory (13) of the onboard unit (4) also contains the identification (TID) of the separate further NFC tag (5).

14. System comprising an onboard-system (1) according to Claim 11 or 12 and a first communication device (10) external thereto, which communication device (10) is designed as an NFC reader and to read out the identification (OID) of the onboard unit (4) from the onboard unit (4) and to read out the identification (TID) of the separate further NFC tag (5) from the separate further NFC tag (5) and to check against a database (25) of onboard unit identifications (OID) and NFC tag identifications (TID) associated with one another.

15. System comprising an onboard-system (1) according to Claim 13 and a first communication device (10) external thereto, which communication device (10) is designed as an NFC reader and to read out the identification of the separate further NFC tag (5) on the one hand from the memory (13) of the onboard unit (4) and on the other hand from the separate further NFC tag (5) and to check these against one another.

16. The onboard unit according to Claim 1, **characterised by** a third communication module (26), which is formed as an NFC reader and is designed to read out an identification (TID) of a further NFC tag (5) separate from the onboard unit (4) and to write this identification into the memory (13), and in that the second communication module (11) is formed as a DSRC, ITS-G5 or WAVE module and is designed to transmit the aforementioned identification to a second external communication device (7), wherein the separate NFC tag (5) is preferably formed as an adhesive label (25), which, once adhered, can no longer be detached without being destroyed.

17. The onboard unit according to Claim 16, **characterised in that** the first communication module (16) and the third communication module (26) are formed by a common NFC module which can be switched over between an operating mode as first communication module (16) and an operating mode as third communication module (26).

## Revendications

1. Unité embarquée (4) pour un système de télématique routière (6), comprenant :
un premier module de communication (16), conçu pour une communication radio de courte portée (9) avec un premier appareil de communication externe (10),
un deuxième module de communication (11), conçu pour une communication radio de longue portée (8) avec un deuxième appareil de communication externe (7), et
une mémoire non volatile (13) à laquelle le premier et le deuxième modules de communication (16,11) peuvent avoir un accès (19, 25),
dans laquelle chaque module de communication (16, 11) possède un mode de communication alimenté en énergie et un mode de veille sans énergie ou économique et
dans laquelle l'alimentation en énergie de la mémoire (13) pendant l'accès (19, 15) est provoquée par le module de communication (16, 11) respectif y accédant.

2. Unité embarquée selon la revendication 1, **caractérisée en ce que** l'alimentation en énergie de la mémoire (13) pendant l'accès (19, 15) a lieu à partir d'au moins un module de communication (16, 11) lui-même.

3. Unité embarquée selon la revendication 1 ou 2, **caractérisée en ce que** le premier module de communication (16) est une étiquette NFC passive, laquelle peut être alimentée en énergie par radio.

4. Unité embarquée selon l'une des revendications 1 à 3, **caractérisée en ce que** le deuxième module de communication (11) est une étiquette NFC passive, laquelle peut être alimentée en énergie par radio.

5. Unité embarquée selon l'une des revendications 1 à 4, **caractérisée en ce que** l'alimentation en énergie de la mémoire (13) pendant l'accès (19, 15) d'au moins un module de communication (16, 11) est réalisée par une batterie (12), laquelle peut être reliée à la mémoire (13) par l'intermédiaire d'un commutateur (2') commandé par ce module de communication (16, 11) pour la durée de l'accès (19, 15).

6. Unité embarquée selon l'une des revendications 1 à 5, **caractérisée en ce que** le deuxième module de communication (11) est un module DSRC, un module ITS-G5 ou un module WAVE ou une étiquette RFID active, lequel/laquelle est alimenté(e) en énergie par une batterie (12) de l'unité embarquée (4).

7. Unité embarquée selon l'une des revendications 1 à 6, **caractérisée en ce que** l'unité embarquée (4) ou la mémoire (13) est conçue pour prioriser un accès à la mémoire (15) du deuxième module de communication (11) par rapport à un accès à la mémoire du premier module de communication (16).

8. Unité embarquée selon l'une des revendications 1 à 6, **caractérisée en ce que** le deuxième module de communication (11) désactive le premier module de communication (16) lorsqu'il se trouve en mode de communication.

9. Unité embarquée selon l'une des revendications 1 à 8, **caractérisée en ce que** la mémoire (13) contient des données de configuration pour le système de télématique routière (6), lesquelles peuvent être inscrites dans la mémoire (13) par l'intermédiaire du premier module de communication (16) et peuvent être lues de la mémoire (13) par l'intermédiaire du deuxième module de communication (11), où les données de configuration contiennent de préférence un ou plusieurs parmi les éléments : identifiant d'utilisateur, identifiant de véhicule, identifiant de compte de péage, numéro de l'axe, paramètre de péage, marquage de marchandise, crédit de compte ou état de compte d'un porte-monnaie électronique de l'unité embarquée, clés cryptographiques, horodatage.

10. Unité embarquée selon l'une des revendications 1 à 9, **caractérisée en ce que** la mémoire (13) contient des données de transactions du système de télématique routière (6), lesquelles peuvent être inscrites dans la mémoire (13) par l'intermédiaire du deuxième module de communication (11) et être lues de la mémoire (13) par l'intermédiaire du premier module de communication (16), où les données de transactions contiennent de préférence un ou plusieurs parmi les éléments : données de lieux, identification de balise, marquage de marchandise, transactions de péage, transactions de paiement de parking, état de compte d'un porte-monnaie électronique de l'unité embarquée, clés cryptographiques, horodatage.

11. Installation embarquée (1) pour un véhicule (2) comprenant :
une unité embarquée (4) selon l'une des revendications 1 à 10, qui contient les caractéristiques complémentaires de la revendication 3 et dont la mémoire (13) contient une identification (OID) de l'unité embarquée (4), laquelle peut être lue par l'intermédiaire du premier module de communication (16), et
une autre étiquette NFC (5) isolée de l'unité embarquée (4) qui contient une identification (TID), lisible par radio, de l'autre étiquette NFC (5) isolée.

12. Installation embarquée selon la revendication 11, **caractérisée en ce que** l'autre étiquette NFC (5) isolée est conçue en tant qu'étiquette collée (24), laquelle ne peut pas être détachée sans être endommagée après le collage.

13. Installation embarquée selon la revendication 11 ou 12, **caractérisée en ce que** la mémoire (13) de l'unité embarquée (4) contient également l'identification (TID) de l'autre étiquette NFC (5) isolée.

14. Installation, comprenant une installation embarquée (1) selon la revendication 11 ou 12 et un premier appareil de communication (10) qui lui est externe, lequel est conçu en tant qu'appareil de lecture NFC et est prévu pour lire l'identification (OID) de l'unité embarquée (4) à partir de l'unité embarquée (4) et l'identification (TID) de l'autre étiquette NFC (5) isolée à partir de l'autre étiquette NFC (5) isolée et pour les contrôler contre une banque de données (25) comprenant des identifications d'unité embarquée (OID) et des identifications d'étiquette NFC (TID) qui sont attribuées mutuellement.

15. Installation, comprenant une installation embarquée (1) selon la revendication 13 et un premier appareil de communication (10) qui lui est externe, lequel est conçu en tant qu'appareil de lecture NFC et est prévu pour lire l'identification de l'autre étiquette NFC (5) isolée, d'une part, à partir de la mémoire (13) de l'unité embarquée (4), et d'autre part, à partir de l'autre étiquette NFC (5) isolée et de les contrôler l'une par rapport à l'autre.

16. Unité embarquée selon la revendication 1, **caractérisée par** un troisième module de communication (26) qui est conçu en tant qu'appareil de lecture NFC et est prévu pour lire une identification (TID) d'une autre étiquette NFC (5) isolée par l'unité embarquée (4) et pour l'inscrire dans la mémoire (13), et que le deuxième module de communication (11) est un module DSCR, un module ITS-G5 ou un module WAVE et est prévu pour envoyer ladite identification vers un deuxième appareil de communication externe (7), où l'étiquette NFC (5) isolée est conçue en tant qu'une étiquette collée (25), laquelle ne peut pas être détachée sans être endommagée après le collage.

17. Unité embarquée selon la revendication 16, **caractérisée en ce que** le premier module de communication (16) et le troisième module de communication (26) sont formés par un module NFC commun, lequel peut être réglé entre un mode de fonctionnement en tant que premier module de communication (16) et un mode de fonctionnement en tant que troisième module de communication (26).
